# EUROPÄISCHE PATENTSCHRIFT

(11) **EP 0 513 646 B1**
(45) Veröffentlichungstag und Bekanntmachung des Hinweises auf die Patenterteilung: **25.09.1996**
(21) Anmeldenummer: 92107621.2
(22) Anmeldetag: 06.05.1992
(51) Int. Cl.: B23K 20/12, F01D 5/02

(54) **Verfahren zum Verbinden von Stahl mit Aluminium- bzw. Titan legierungsteilen**
Method for joining steel to aluminium or titanium alloye
Procédé pour joindre l'acier à des alliages d'aluminium ou de titane

(30) Priorität: 16.05.1991 DE 4116088
(43) Veröffentlichungstag der Anmeldung: 19.11.1992
(73) Patentinhaber: FORSCHUNGSZENTRUM JÜLICH GMBH, 52425 Jülich (DE)
(72) Erfinder: Ambroziak, Andrzej, Dr., PL-51-219 Wroclaw (PL); Lison, Rudolf, Dr., W-5120 Herzogenrath (DE); Ricanek, Rudolf, W-7891 Weilheim (DE)

(56) Entgegenhaltungen:
- EP-A- 0 368 642
- GB-A- 1 462 772
- US-A- 3 121 948
- US-A- 3 421 201
- PATENT ABSTRACTS OF JAPAN vol. 7, no. 165 (M-230)20. Juli 1983
- PATENT ABSTRACTS OF JAPAN vol. 9, no. 107 (M-378)11. Mai 1985

## Beschreibung

Die Erfindung bezieht sich auf ein Verfahren zum Verbinden von Rohlingen und Konstruktionsteilen aus Stahl mit solchen aus Aluminiumlegierung oder Titanlegierung, wobei die Rohlinge bzw. Teile unter Zwischenschaltung zumindest einer Übergangsschicht aus einem duktilen Nebengruppenmetall miteinander verbunden werden.

Die Verbindung unterschiedlicher Werkstoffe spielt in der hochentwickelten Fertigungstechnik eine erhebliche Rolle, da häufig innerhalb einer Anordnung unterschiedliche Eigenschaften gefordert werden, die nicht mit einem einzigen Material erreicht werden konnen, so daß je nach Herstellung und Betriebsfunktion für einzelne Elemente eines Teiles oder einer Konstruktion unterschiedliche Werkstoffe eingesetzt werden, um auf ein Optimum an wirtschaftlicher Herstellung und mechanischen Eigenschaften zu kommen.

So werden z.B. gemäß der EP-PS 0 129 311 aus herstellungstechnischen Gründen für das Verdichterlaufrad eines Turboladers Aluminium oder Aluminiumlegierung und für die anzufügende Welle bzw. das Befestigungsbauteil für dieselbe wegen der guten mechanischen Eigenschaften, wie Festigkeit und Zähigkeit, Werkzeugstahl vorgesehen, die durch Reibschweißen miteinander verbunden werden sollen.

Dieser Empfehlung zu folgen, bereitet allerdings einige Schwierigkeiten, da zwar Aluminium unter gewissen Bedingungen durch Reibschweißen mit Stahl verbunden werden kann, aber die Schweißverbindung von Stahl mit aushärtbaren Aluminiumlegierungen nicht zu belastbaren Verbindungen führt.

Zwar wird in der GB-PS 1 462 772 bereits ein Verfahren zur Reibschweißverbindung von Stahl mit Aluminium oder Aluminiumlegierung beschrieben, bei dem auf die Fügefläche des Stahls vorab eine maximal 10 µm dicke Chromschicht galvanisch aufgebracht werden soll. Bei diesem Verfahren werden jedoch zum einen zusätzliche Einrichtungen für werkstatt-fremde Techniken benötigt, die zudem mit Entsorgungsproblemen belastet sind und eine erhebliche Erfahrung in der Bildung haftender Chromüberzüge verlangen, die üblicherweise zum Abblättern neigen. Zum anderen erscheint die mechanische Belastbarkeit des schließlich vermittels des Chromüberzuges gebildeten Stahl-Aluminiumlegierungs-Verbundes problematisch.

Ebenso sind belastbare Reibschweißverbindungen von Stahl mit Titanlegierungen bisher nicht erreicht worden.

Aufgabe der Erfindung ist daher ein Verfahren zu entwickeln, mit dem Rohlinge oder Konstruktionsteile aus Stahl mit solchen aus Aluminiumlegierungen oder Titanlegierungen durch Reibschweißen verbunden werden können.

Das zu diesem Zweck entwickelte erfindungsgemäße Verfahren ist dadurch gekennzeichnet, daß man
a) zum Verbinden von Teilen aus Stahl mit solchen aus Aluminiumlegierung auf den Stahl eine Reinnickelschicht durch Reibschweißen aufbringt, deren abgearbeitete Oberfläche mit der Aluminiumlegierung durch Reibschweißen verbunden wird oder
b) zum Verbinden von Teilen aus Stahl mit solchen aus Titanlegierung auf den Stahl durch Reibschweißen eine Kupferschicht und auf die Titanlegierung eine Vanadinschicht durch Reibschweißen aufträgt und die bearbeiteten Kupfer- und Vanadinoberflächen durch Reibschweißen miteinander verbindet.

Durch die Auswahl der genannten Übergangsschichten, die insgesamt in Werkstatt-Technik, d.h. durch Reibschweißen in entsprechender Dicke, erzeugt werden, können Wärmespannungen zwischne den Verbindungspartnern kompensiert werden. Die Stoffsysteme an den Verbindungsflächen bleiben überschaubar, und es wird insbesondere die Bildung von spröden Phasen im Grenzbereich unterdrückt. Dabei wird auf metallurgische Verträglichkeit der Verbindungspartner sowie auf Reibschweißeignung geachtet.

Zwar ist aus der US-A 3 121 948 ein Reibschweißverfahren zum Verbinden von Stahl, insbesondere rostfreiem Stahl, mit Aluminium bekannt, bei dem auf die Stahlfläche vor der Reibschweißverbindung mit Aluminium eine dünne Nickelschicht durch Sputtern, Galvanisieren, Aufschweißen, Aufpressen etc. aufgebracht wird, die beim Reibschweißen in die angrenzenden Werkstücke diffundiert.

Dieses seit 1964 bekannte Verfahren hat ganz offensichtlich nicht anregend auf das weit problematischere Verbinden von Stahl mit Aluminiumlegierung gewirkt, wie aus der o.g. GB-PS 1 462 772 von 1977 hervorgeht.

Aus der EP 0 368 642 A2 ist schließlich ein Reibschweißverfahren zum Verbinden von hauptsächlich in Form einer intermetallischen Verbindung vorliegendem TiAl mit Konstruktionsstahl bekannt, bei dem zunächst auf den Stahl eine Zwischenschicht aus austenitischem rostfreien Stahl, hitzebeständigem Stahl oder Superlegierung auf Nickel- oder Kobaltbasis aufgebracht wird. Die mit solchen Vielstoffsystemen gebildeten Verbindungszonen erscheinen in vielerlei Hinsicht bedenklich.

Das erfindungsgemäße Reibschweißen erfolgt zweckmäßig unter Ausschluß der Umgebungsluft unter Inertgas, im Vakuum oder insbesondere unter Flüssigkeit, wie z.B. einem Petroleum-Mineralölgemisch, wie es für funkenerosive Bearbeitung benutzt wird.

Für die Verbindung können herkömmliche Reibschweißmaschinen eingesetzt werden, die mit festen Drehzahlen oder mit stufenloser Drehzahleinstellung arbeiten. Als Betriebsweise kommen Zeitreiben oder Wegreiben in Betracht.

Beim erfindungsgemäßen Verfahren können übliche Drehgeschwindigkeiten in der Gegend von 500 - 2000 U/min, insbesondere im Bereich um 1000 U/min und Stauchdrucke bis etwa 500 kN, insbesondere im Bereich von 100 - 200 kN angewandt werden.

Die Zwischenschichten im fertigen Verbund sind möglichst dünn; ihre Dicke liegt zweckmäßigerweise im mm-Bereich.

Vor dem Reibschweißen wird die Oberfläche sorgfältig vorbereitet, insbesondere wird die frisch abgedrehte Oberfläche in einem Ultraschallbad entfettet, mit Alkohol gespült und getrocknet.

Um hohe Anfahrmomente zu vermeiden, kann auf einem Verbindungspartner eine kegelige Verbindungsfläche vorgesehen werden, jedoch werden aus Gründen der Belastbarkeit des Verbundes ebene Fügeflächen bevorzugt.

Rauhigkeiten der zu verbindenden Flächen von 30 - 300 µm, insbesondere um 100 µm, sind zweckmäßig.

Besonderheiten der Erfindung gehen aus den Unteransprüchen sowie aus der nachfolgenden Beschreibung anhand von Beispielen hervor.

Dabei wird auf die beigefügten Abbildungen bzw. Figur Bezug genommen; es zeigen im einzelnen:
- Abb. 1 bis 5: das Ergebnis von Reibschweißverbindungen gemäß Beispiel 1;
- Abb. 5 und 7: Makroaufnahmen der Verbunde gemäß Beispiel 2; und
- Figur 8 u. 9: Verdichterlaufrad mit Turbinenrad und Welle eines Turboladers in zwei Alternativen für das Befestigungsbauteil für die Welle.

### Beispiel 1

Verbindung von Vergütungsstahl St575 mit aushärtbarer Aluminiumlegierung AN40.

Auf die, wie oben angegeben, vorbereitete Stirnfläche eines zylindrischen Stahlstabes (⌀ 45 x 140) wurde ein Nickelplättchen (2 x 50 x 50) durch Reibschweißen aufgebracht. Nach einer stirnseitigen Bearbeitung der aufgeschweißten Nickelschicht auf der Drehbank wurde in einem zweiten Reibschweißgang ein zylindrischer Stab aus der Aluminiumlegierung AN40 (⌀ 50 x 150) angefügt und damit der Verbund St575/Ni/AN40 fertiggestellt. Die erreichte Festigkeit lag bei 211 N/mm². Die Festigkeit des Verbundes wird durch die Oberflächenrauhigkeit der Nickelschicht beeinflußt. Höchste Festigkeitswerte wurden mit Rauhigkeitswerten der Ni-Bindefläche (zum AN40) von R_{Z} = 162 µm, R_{A} = 43 µm und Rₜ = 185 µm erreicht. Dabei wird die höchste Festigkeit an einem Verbund mit AN40 im ausgehärteten Zustand beobachtet.

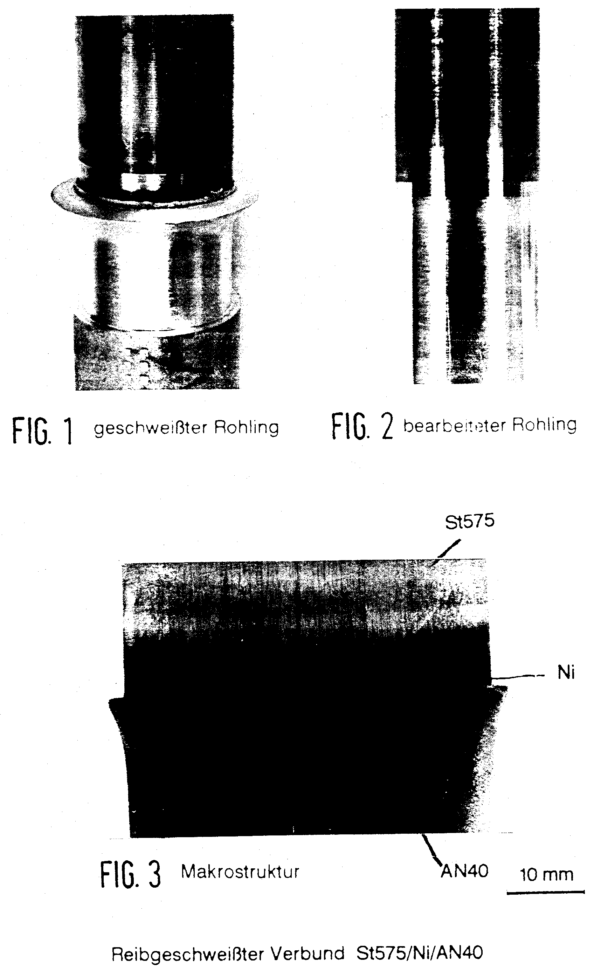

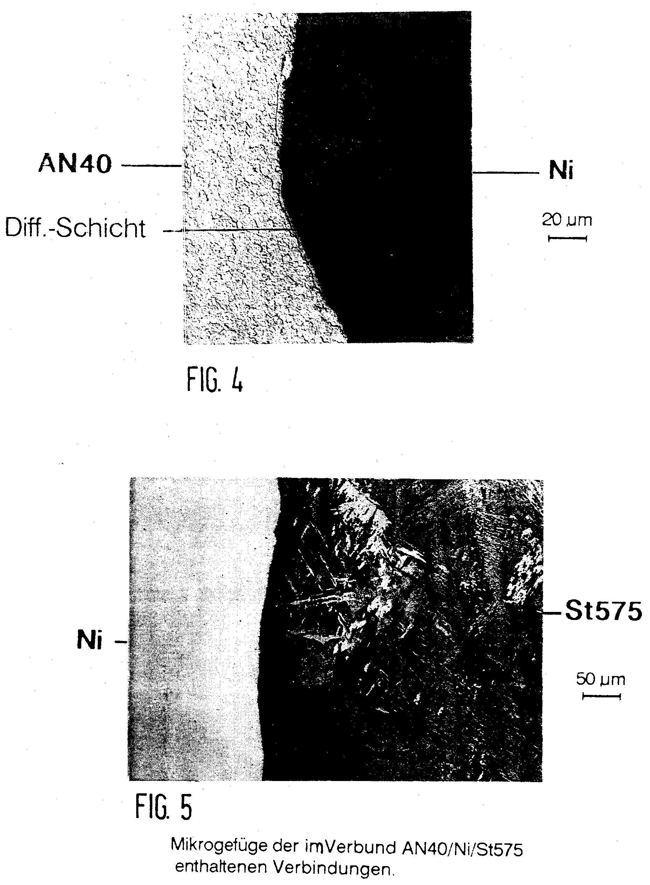

Auf den beigefügten Abbildungen sieht man den reibgeschweißten Rohling(Abb.1) nach seiner Bearbeitung (Abb.2) und den Querschnitt durch den Rohling (Abb.3). Die Abbildungen 4 und 5 zeigen die Mikrogefüge der Übergänge in diesem Verbund.

Um Versprödungen in der Bindeebene zu vermeiden, wurde die Verbindung St575/Ni 60 min lang unter Hochvakuum bei 680°C wärmebehandelt.

In analoger Weise, wie vorstehend beschrieben, können Rohlinge aus anderen aushärtbaren Aluminiumlegierungen wie AlCuMg1, AlCuMg2 oder AlCuMg1828 mit Stahl durch Reibschweißen mit einer Ni-Zwischenschicht miteinander verbunden werden.

### Beispiel 2

Verbindung von Vergütungsstahl St575 mit Titanlegierung Ti6Al4V.

Auf einen Rundstab der Titanlegierung (⌀ 45 x 150) einerseits und auf einen St575 Rundstab (⌀ 45 x 140) andererseits wurden ein Vanadinplättchen bzw. eine Kupferschicht durch Reibschweißen aufgebracht und sorgfältig auf der Drehbank bearbeitet. Es verblieben auf dem Titan eine Vanadinschicht der Dicke 3,5 - 4,5 mm und auf St575 eine Kupferschicht der Dicke 5 - 8,5 mm. Die weitere Verschweißung von Vanadin mit Kupfer führte zu einer Verkürzung zu Lasten des Kupfers. Im fertigen Verbund hatte die Kupferschicht eine Dicke unter 1 mm.

Besonders gute Belastbarkeiten des Verbundes Ti6A14V/V/Cu/St575 bis in den Bereich von 660 N/mm² erhalt man durch hohe stauchdrücke beim Reibschweißen im Bereich von 150 N/mm².

Um Härteanstiege im St575 zu vermeiden, wurde bei weiteren Versuchen eine Zwischenschicht aus austenitischem Stahl X10CrNiTi189 zwischen Kupfer und St575 eingebaut. Diese zusätzliche Zwischenschicht unterliegt keinen Strukturveränderungen während des Reibschweißens, sie verhindert aber eine Aufheizung des St575 in den Austenitbereich und die damit verbundene Aufhärtung während der Abkühlung. Die X10CrNiTi189-Schicht wurde mit dem St575 reibverschweißt und diese Verbindung dann eine Std. bei 600°C wärmebehandelt, um die Aufhärtung im St575 zu beseitigen. Nach einer Bearbeitung der austinitischen Schicht auf der Drehbank auf 2,5 mm Dicke konnte sie weiter mit Kupfer reibverschweißt werden. Mit einem solchen Verbund wurden Festigkeiten von 454 N/mm² erreicht.

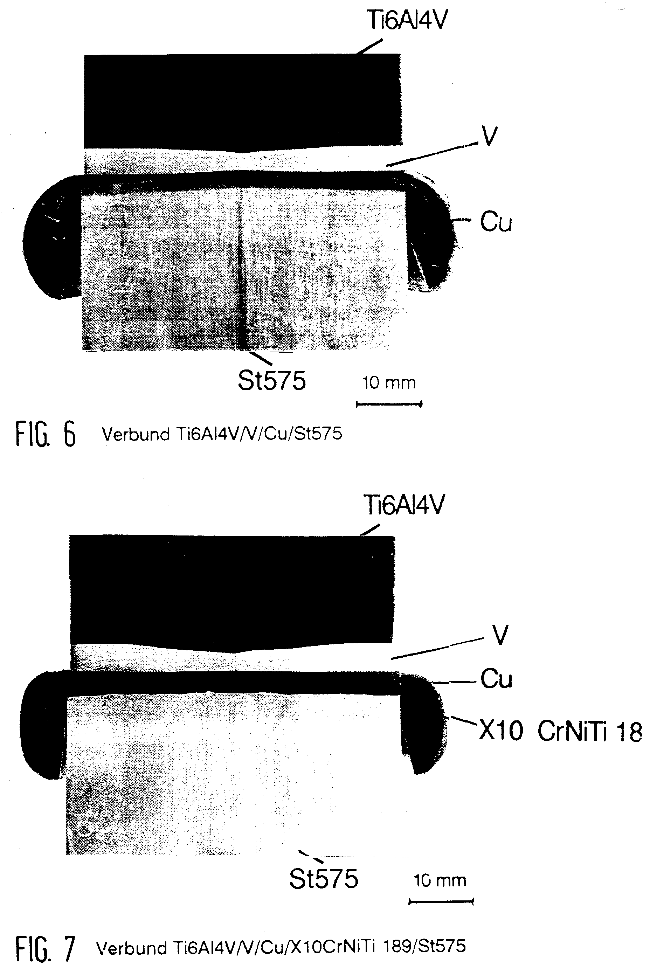

Die Abbildungen 6 und 7 zeigen Makroaufnahmen der Verbunde.

Mit der gleichen Anordnung von Zwischenschichten und gleichen verfahrensschritten können Werkstoffverbunde von Stahl mit α- und (α+β)-Titanlegierungen, wie z.B. TiCu2 oder TiAl5Fe2,5, hergestellt werden.

Stähle mit niedrigem Kohlenstoffgehalt, die im Verlauf der Abkühlung nach dem Reibschweißen nicht zur Martensitbildung neigen, können unter Verzicht auf eine Zwischenschicht aus dem Stahl X10CrNiTi189 direkt mit Kupfer reibverschweißt werden.

### Beispiel 3

Das vorstehend in Beispiel 1 angegebene Verfahren wurde zum Anfügen eines Befestigungsbauteils für die Welle eines Turboladers an das Verdichterlaufrad angewandt:

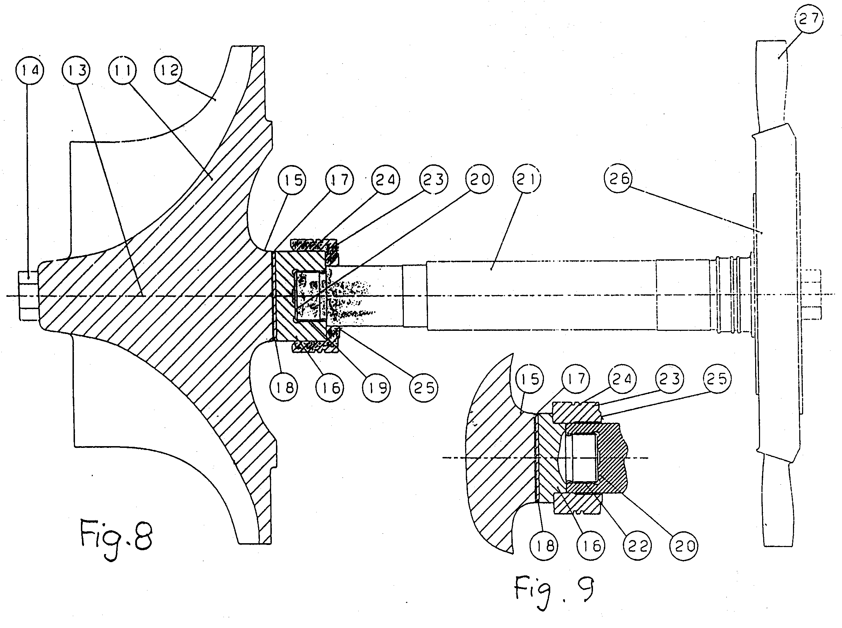

Auf der beigefügten Figur 8 ist das so erzeugte Bauteil wiedergegeben: Mit der axialen Stirnfläche 17 der mit Schaufeln 12 verbundenen Nabe 11 ist über Zwischenschichten 18 das mit Gewinde versehene Befestigungsbauteil 16 reibverschweißt. Mit dem Befestigungsbauteil 16 ist die mit der Turbinenscheibe 26 mit einstückigen oder angesetzten Schaufeln 27 integrale Welle 21 verschraubt, über die ein zylindrischer oder abgestufter Ring 23 übergreift, der aufgeschrumpft oder aufgesteckt ist und Radialdichtungsringe 24 aufnimmt und axial als Gleitfläche 25 ausgebildet ist.

Anstelle des Befestigungsbauteils 16 kann auch die Welle 21 selbst mit der Nabe 11 reibverschweißt sein. Das gleiche gilt für den Anschluß des Turbinenrades 26 an die Welle 21.

Das Verdichterrad 11 - 17 kann alternativ auch aus einer Titanknetlegierung anstelle der Aluminiumknetlegierung bestehen und wird dann gemäß Beispiel 2 durch Reibschweißen mit dem Befestigungsbau teil 16 oder der Welle 21 verbunden.

## Patentansprüche

1. Verfahren zum Verbinden von Rohlingen und Konstruktionsteilen aus Stahl mit solchen aus Aluminiumlegierung oder Titanlegierung, wobei die Rohlinge bzw. Teile unter Zwischenschaltung zumindest einer Übergangsschicht aus einem duktilen Nebengruppenmetall miteinander verbunden werden,
**dadurch gekennzeichnet,**
daß man
a) zum Verbinden von Teilen aus Stahl mit solchen aus Aluminiumlegierung auf den Stahl eine Reinnickelschicht durch Reibschweißen aufbringt, deren abgearbeitete Oberfläche mit der Aluminiumlegierung durch Reibschweißen verbunden wird oder
b) zum Verbinden von Teilen aus Stahl mit solchen aus Titanlegierung auf den Stahl durch Reibschweißen eine Kupferschicht und auf die Titanlegierung eine Vanadinschicht durch Reibschweißen aufträgt und die bearbeiteten Kupfer- und Vanadinoberflächen durch Reibschweißen miteinander verbindet.

2. Verfahren nach Anspruch 1b,
**dadurch gekennzeichnet,**
daß man auf einen Stahl, der zur Ausbildung martensitischer Zonen neigt, vor dem Auftrag der Kupferschicht eine Schicht aus austenitischem Stahl durch Reibschweißen aufbringt.

3. Verfahren nach Anspruch 1 oder 2,
**dadurch gekennzeichnet,**
daß als Rohlinge das Turbinenrad und die Welle oder ein Befestigungsbauteil für die Welle eines Turboladers eingesetzt werden.

## Claims

1. Method for joining blanks and structural components of steel to those of an aluminium alloy or titanium alloy, the blanks or components being joined to one another with insertion of at least one transition layer of a ductile subgroup metal, characterized in that
a) for joining components of steel to those of an aluminium alloy, a pure nickel layer is applied by friction-welding to the steel, the surface of the nickel layer, after weld bead removal, being joined to the aluminium alloy by friction-welding or
b) for joining components of steel to those of a titanium alloy, a copper layer is applied to the steel by friction-welding and a vanadium layer is applied to the titanium alloy by friction-welding and the copper and vanadium surfaces are, after weld bead removal, joined to one another by friction-welding.

2. Method according to Claim 1b, characterized in that a layer of austenitic steel is applied by friction-welding to a steel, which tends to form martensitic zones, before the application of the copper layer.

3. Method according to Claim 1 or 2, characterized in that the blanks used are the turbine wheel and the shaft or a fixing component for the shaft of a turbocharger.

## Revendications

1. Procédé pour réunir des ébauches et des pièces de construction en acier à des ébauches ou des pièces de construction en alliage d'aluminium ou en alliage de titane, les ébauches ou les pièces étant réunies entre elles moyennant l'interposition d'au moins une couche de transition formée d'un métal ductile de groupe secondaire, caractérisé en ce que
a) pour réunir des pièces en acier à des pièces en alliage d'aluminium, on dépose sur l'acier, par soudage par friction, une couche de nickel pur, dont on réunit par soudage par friction la surface traitée, à l'alliage d'aluminium, ou
b) pour réunir des pièces en acier à des pièces en alliage de titane, on dépose par soudage par friction, une couche de cuivre sur l'acier et, par soudage par friction, une couche de vanadium sur l'alliage de titane et on réunit entre elles par soudage par friction les surfaces traitées du cuivre et du vanadium.

2. Procédé selon la revendiation 1b, caractérisé en ce qu'on dépose par soudage par friction une couche d'acier austénitique sur un acier qui a tendance à former des zones martensitiques, avant le dépôt de la couche de cuivre.

3. Procédé selon la revendiation 1 ou 2, caractérisé en ce qu'on utilise comme ébauches le rotor de turbine et l'arbre ou un composant de fixation pour l'arbre d'un turbocompresseur.
